# EUROPÄISCHE PATENTSCHRIFT

(11) **EP 1 793 717 B1**
(45) Veröffentlichungstag und Bekanntmachung des Hinweises auf die Patenterteilung: **17.03.2010**
(21) Anmeldenummer: 05786870.5
(22) Anmeldetag: 31.08.2005
(51) Int. Cl.: A47J 31/54, A47J 31/06

(54) **KAFFEEMASCHINE UND STEUERUNGSVERFAHREN DAFÜR**
COFFEE MACHINE AND CONTROL METHOD FOR SAID MACHINE
MACHINE A CAFE ET PROCEDE DE COMMANDE

(30) Priorität: 24.09.2004 DE 102004046455
(43) Veröffentlichungstag der Anmeldung: 13.06.2007
(73) Patentinhaber: BSH Bosch und Siemens Hausgeräte GmbH, 81739 München (DE)
(72) Erfinder: STEFFL, Michael, 83250 München (DE); MAYR, Andreas, 83254 Breitbrunn (DE); MAGG; Johannes, 83368 St Georgen (DE)
(86) Internationale Anmeldenummer: PCT/EP2005/054276
(87) Internationale Veröffentlichungsnummer: WO 2006/032601

(56) Entgegenhaltungen:
- WO-A-03/030696
- US-A- 5 440 972

## Beschreibung

Die Erfindung betrifft eine Kaffeemaschine gemäß dem Oberbegriff von Anspruch 1 sowie ein Steuerungsverfahren für eine Kaffeemaschine gemäß dem Oberbegriff von Anspruch 8.

Kaffeemaschinen des Standes der Technik arbeiten nach unterschiedlichen Prinzipien. Die gängigsten Modelle sind die sogenannten drucklos arbeitenden Kaffeemaschinen. Bei diesen fließt Wasser aus einem Vorratsbehälter in ein elektrisch beheizbares Rohr. Insbesondere durch Dampfentwicklung in diesem Rohr wird erwärmtes Wasser dann durch eine Steigleitung zu einem Auslauf gedrückt, über welchen das erwärmte Wasser dann in einen Kaffeefilter tropft. Aus diesem Kaffeefilter kann der Filterkaffee bei atmosphärischem Druck dann in eine Kanne fließen.

Im Gegensatz hierzu liegt bei Espressomaschinen ein erhöhter Druck im Bereich des Kaffeemehls vor, beispielsweise 15 bar. Dies wird erreicht, indem Wasser aus einem Wasserbehälter oder einer sonstigen Wasserzuführung einer elektromotorisch angetriebenen Pumpe zugeführt wird, die das Wasser dann unter hohem Druck über einen elektrisch heizbaren Bereich einer Kaffeemehlaufnahmeeinrichtung zuführt. Diese Kaffeemehlaufnahmeeinrichtung umfasst im Allgemeinen ein Sieb zur Aufnahme des Kaffees. Zur Erzeugung des hohen Drucks im Bereich des Kaffees ist die Kaffeemehlaufnahmeeinrichtung während des Betriebs in einem gegen die Atmosphäre abgedichteten Bereich angeordnet, der als Druckraum oder Brühkammer bezeichnet wird.

Bei einer weiter prinzipiell anders arbeitenden Kaffeemaschine ist vorgesehen, das Wasser zur Zubereitung des Kaffees zunächst aus einem Wasserbehälter in einen beheizbaren Zwischenbehälter zu überführen. Von diesem Zwischenbehälter gelangt das erwärmte Wasser zu einer elektromotorisch angetriebenen Pumpe, von der es unter erhöhtem Druck, beispielsweise 2 bis 3 bar, einer in einer abgedichteten Brühkammer vorgesehenen Kaffeemehlaufnahmeeinrichtung zugeführt wird.

Bei einer besonderen, als sog. Kaffeepad-Maschine bezeichneten Form von Kaffeemaschinen mit einer Brühkammer, ist vorgesehen, dass der Kaffee nicht in loser Form als Kaffeemehl in die Kaffeemehlaufnahmeeinrichtung eingebracht wird, sondern in Form eines Kaffeepads, das heißt in verdichteter Form mit Filterpapier umgeben, in einen Halter eingelegt wird. Der Halter ist in einer Brühkammer angeordnet, die aus einem Brühkammeroberteil und einem dichtend mit diesem verbindbaren Brühkammerunterteil gebildet wird. Über das Brühkammeroberteil wird erhitztes Wasser bzw. Dampf in die Brühkammer zugeführt. Der Halter für die Kaffeepads kann Teil des Brühkammerunterteils oder als separates Teil in dieses eingesetzt sein. Das Brühkammerunterteil weist eine Auslassöffnung auf, aus der bereiteter Kaffee austreten kann. Der Halter kann so gestaltet sein, dass das erhitzte Wasser bzw. der Dampf weitestgehend ungehindert die Kaffeepads durchströmen kann.

Aus der WO 03/030696 A1 ist eine Kaffeemaschine zur Bereitung von Kaffee auf Grundlage von Kaffeepads bekannt. Diese weist einen Durchlauferhitzer zur Erhitzung des Brühwassers auf. Weiter ist ein Temperaturfühler vorgesehen, mit welchem ermittelt wird, ob innerhalb einer vorgegebenen Zeit die vorgegebene Wassertemperatur erreicht wird, d.h. ob die Heizung ordnungsgemäß funktioniert oder z.B. aufgrund eines elektrischen Defektes oder wegen Verkalkung keine ausreichende Heizleistung bereitstellen kann. In diesem Fall wird die Maschine wieder abgeschaltet und es leuchtet eine Warnleuchte auf.

Nachteilig bei dieser bekannten Kaffeemaschine bzw. dem Steuerungsprogramm dafür ist, dass im Fall einer Düsenverstopfung Funktionsstörungen auftreten, deren Ursache vom Benutzer nicht ohne weiteres erkennbar sind. Das für den Benutzer sichtbare Zeichen der Funktionsstörung, nämlich eine ausbleibende Kaffeeförderung, kann vielfältige Ursachen, einschließlich Fehlbedienung, haben, sodass der Benutzer keinen Ansatzpunkt zur Behebung der Funktionsstörung findet. Werden bei einer Düsenverstopfung jedoch nicht schnell geeignete Maßnahmen ergriffen, kann es zu Beschädigungen des Gerätes kommen. Das im Durchlauferhitzer befindliche Wasser, das aufgrund der Düsenverstopfung nicht entweichen kann, wird länger als vorgesehen erhitzt, was zu Dampfbildung und der Erzeugung eines schädlichen Überdrucks führen kann.

Eine weitere Kaffeemaschine ist aus der US 5440972 A bekannt.

Aufgabe der Erfindung ist es, eine gattungsgemäße Kaffeemaschine derart zu verbessern, dass eine Verstopfung der Düse erkannt und gefahrlos beseitigt werden kann.

Diese Aufgabe wird mit den Merkmalen der unabhängigen Ansprüche gelöst.

Vorteilhafte Ausführungsformen der Erfindung sind in den abhängigen Ansprüchen angegeben.

Die Erfindung baut auf der gattungsgemäßen Kaffeemaschine dadurch auf, dass das Steuerungssystem, wenn der Messwert eine Größe außerhalb vorbestimmter Grenzen annimmt, die Pumpleistung und die Heizleistung abschaltet und ein Wiedereinschalten der Pumpleistung und der Heizleistung für eine spezifizierte Sperr-Zeitspanne durch Aktivierung von Sperrmitteln sperrt.

Diese Erfindung verwirklicht ein Konzept aus mehreren zusammenwirkenden Komponenten: Es wird ein in bekannten Kaffeemaschinen üblicherweise vorhandenes Element, nämlich ein Temperaturfühler, vorteilhaft genutzt, um eine Sicherung gegen den bei Düsenverstopfung auftretenden Überdruck zu schaffen. Es ist erfindungsgemäß nicht erforderlich, einen speziellen Drucksensor zu installieren, was mit zusätzlichem Aufwand und Kosten verbunden wäre. Vielmehr macht sich die Erfindung die Erkenntnis zunutze, dass der Überdruck eine Folge übermäßiger Erhitzung ist, die ihrerseits auf fehlenden Abfluss wegen Düsenverstopfung zurückzuführen ist. Es wird daher ein leicht zugänglicher Parameter gemessen, dessen Auswandern aus einem vorgegebenen Sollbereich, zum einen zur Erkennung der zugrunde liegenden Ursache (Düsenverstopfung) und zum anderen zum Initiieren von Abwehrmaßnahmen gegen schädliche Folgen (Überdruck) genutzt wird.

Die Abwehrmaßnahmen betreffen dabei zum einen die akute Gefahrenbeseitigung. Durch Sofort-Abschaltung der Heizung wird einem weiteren Druckanstieg entgegengewirkt. Die optional zur Abschaltung der Heizleistung zusätzliche Abschaltung der Pumpe führt zu weiterer Druckentlastung, sodass die Gefahr der Geräteschädigung wirksam behoben wird. Zum anderen führt die Sperrung gegen Wiedereinschalten zu einer nachhaltigen Sicherung, da ein erneuter Druckaufbau bei noch immer verstopfter Düse verhindert wird. Zugleich erkennt der Benutzer am Verhalten der Maschinensteuerung die Düsenverstopfung als Ursache der Funktionsstörung.

Bei einer vorteilhaften Ausführungsform ist vorgesehen, dass das Steuersystem zum Aktivieren und/oder Deaktivieren des Sperrmittels einen Zeitschalter umfasst. Hierdurch wird eine Spezifikation der Sperr-Zeitspanne durch Definition eines Zeitintervalls ermöglicht.

Das Zeitintervall sollte vorzugsweise so lange gewählt werden, dass eine ausreichende Abkühlung der Maschine und eine Reinigung der verstopften Düse möglich ist.

Alternativ oder zusätzlich kann vorgesehen sein, dass das Steuersystem wenigstens einen Messfühler zur Detektion eines für die Deaktivierung des Sperrmittels relevanten Ereignisses umfasst.

Dabei kann es sich bei einer Ausführungsform der Erfindung um einen Temperaturfühler zur Erfassung eines Wiedereintritts des Temperaturmesswertes in die vorbestimmten Grenzen für den Messwert handeln. Damit kann ein Wiedereinschalten mindestens so lange verhindert werden, wie die Temperatur des Systems oberhalb eines kritischen Wertes liegt.

Bei einer anderen Ausführungsform der Erfindung ist vorgesehen, dass der Messfühler ein Öffnungssensor zur Erkennung eines Öffnens der Brühkammer ist. Das Öffnen der Brühkammer kann als Indiz dafür genommen werden, dass der Benutzer versucht, zwecks Reinigung an die verstopfte Düse zu gelangen. Bei dieser Ausführungsform wird ein Wiedereinschalten so lange unterbunden, bis Maßnahmen zur Behebung der Ursache der Funktionsstörung unternommen wurden.

Selbstverständlich ist es auch möglich, mehrere oder sämtliche der vorgenannten Merkmale zur Spezifikation der Sperr-Zeitspanne zu nutzen. Insbesondere kann ein Zeitschalter zur Definition einer Mindest-Sperrzeit eingesetzt werden, wobei ein tatsächliches Wiedereinschalten jedoch zusätzlich vom Eintritt eines oder mehrerer bestimmter Ereignisse abhängig gemacht wird.

Günstigerweise ist ein Signalgeber zur Erzeugung eines Alarmsignals bei durch Grenzüberschreitung des Messwertes bedingter Abschaltung vorgesehen. Hierdurch kann der Benutzer ausdrücklich auf die Düsenverstopfung als Ursache der Funktionsstörung aufmerksam gemacht werden und diese ohne aufwendige Fehlersuche beheben. Als Signalgeber bieten sich insbesondere optische Anzeigen in Form von Warnleuchten, alphanumerischen Anzeigen u.ä. oder Alarmtonerzeuger an.

Bei einer besonderen Ausführungsform kann vorgesehen sein, dass ein Signalgeber zur Erzeugung eines Alarmsignals während der Dauer der Sperr-Zeitspanne vorgesehen ist. Es kann sich dabei um den vorgenannten oder einen separaten Signalgeber handeln. Ein solcher Signalgeber zeigt dem Benutzer den Ablauf der Sperrzeit an.

Die Erfindung baut auf dem gattungsgemäßen Steuerungsverfahren dadurch auf, dass die Pumpleistung und die Heizleistung abgeschaltet werden, wenn der Messwert eine Größe außerhalb vorbestimmter Grenzen annimmt, und dass ein Wiedereinschalten der Pumpleistung und der Heizleistung für eine spezifizierte Sperr-Zeitspanne gesperrt wird. Auf diese Weise werden die Vorteile und Besonderheiten der erfindungsgemäßen Kaffeemaschine auch im Rahmen des Steuerungsverfahrens umgesetzt. Dies gilt auch für die bevorzugten Ausführungsformen dieses Verfahrens.

So kann günstigerweise vorgesehen sein, dass die Spezifikation der Sperr-Zeitspanne eine Vorbestimmung einer minimalen Sperr-Zeitspanne umfasst. Dies stellt, unabhängig von eventuellen, weiteren Bedingungen für die Freigabe der Wiedereinschaltung, sicher, dass besonders relevante Parameter, wie z.B. die Temperatur des Brühwassers, ausreichend Zeit haben, in unkritische Wertebereich zurückzukehren.

Alternativ oder zusätzlich kann vorgesehen sein, dass die Spezifikation der Sperr-Zeitspanne von einem durch wenigstens einen Messfühler detektierbarem Ereignis abhängt.

Dabei kann es insbesondere günstig sein, dass das Ereignis der Eintritt eines Temperaturmesswertes in einem vordefinierten Bereich ist. Auf diese Weise kann das Erreichen unkritischer Wertebereiche direkt erfasst werden.

Bei einer anderen Ausführungsform ist vorgesehen, dass das Ereignis ein Öffnen der Brühkammer oder noch vorteilhafter ein Reinigen der Düse umfasst. Beispielsweise kann die Entnahme der Düse durch geeignete Messmittel detektiert werden. Auf diese Weise kann die Behebung der Ursache der Funktionsstörung in besonders direkter Weise erfasst werden.

Selbstverständlich ist auch möglich einige oder sämtliche der vorgenannten Merkmale in einem besonders günstigen Steuerungsverfahren zu kombinieren.

Bei einer vorteilhaften Weiterbildung ist vorgesehen, dass bei durch Grenzüberschreitung des Messwertes bedingter Abschaltung ein Benutzersignal erzeugt wird. Dabei kann es insbesondere nützlich sein, dass das Benutzersignal für die Dauer der Sperr-Zeitspanne erzeugt wird. Der Benutzer wird hierdurch ausdrücklich auf die Ursache der Funktionsstörung und/oder den Ablauf der Sperr-Zeitspanne hingewiesen.

Die Erfindung ist anhand der Figuren näher erläutert. Es zeigen:
- Figur 1: eine perspektivische Ansicht einer erfindungsgemäßem Kaffeemaschine;
- Figur 2: eine Schnittansicht der Kaffeemaschine von Figur 1;
- Figur 3: eine Schnittansicht eines Brühkammerunterteils der Kaffeemaschine von Figur 1;
- Figur 4: ein Flussdiagramm des erfindungsgemäßen Steuerungsverfahrens.

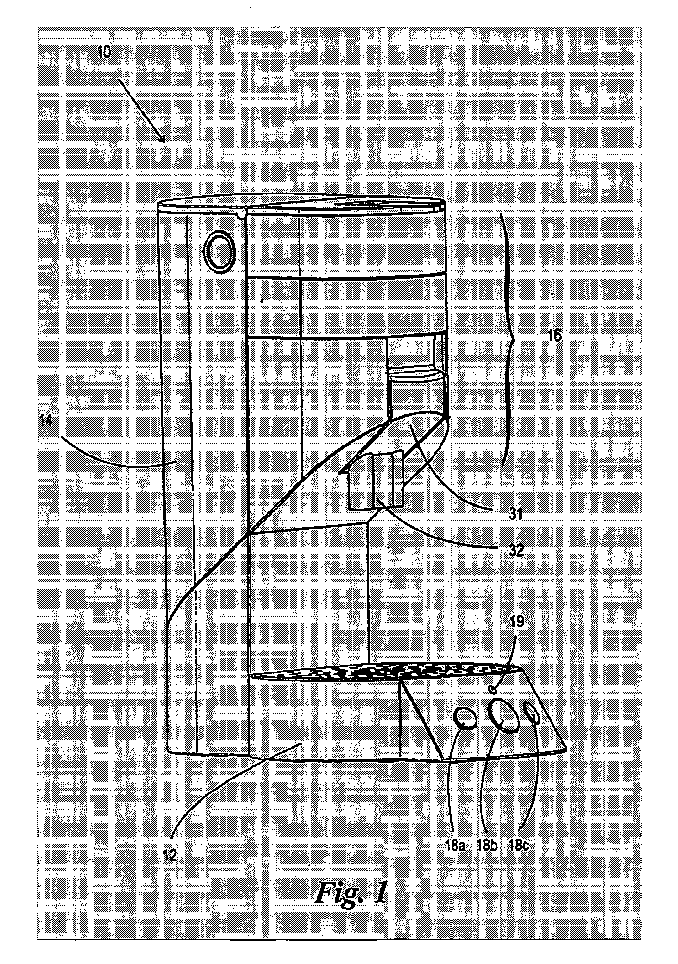

Figur 1 zeigt eine perspektivische Darstellung einer Kaffeemaschine 10. Die Kaffeemaschine 10 umfasst einen flachen Ständerteil 12, einen säulenartigen Vorrats- und Betriebsteil 14 und einen Kaffeebereitungsteil 16. Der Kaffeebereitungsteil 16 ist oberhalb des Ständerteils 12 an dem Vorrats- und Betriebsteil angeordnet. Im vorderen Bereich des Ständerteils 12 ist ein Bedienfeld mit mehreren Bedientasten 18a, 18b und 18c sowie einer Kontrollleuchte 19 angeordnet.

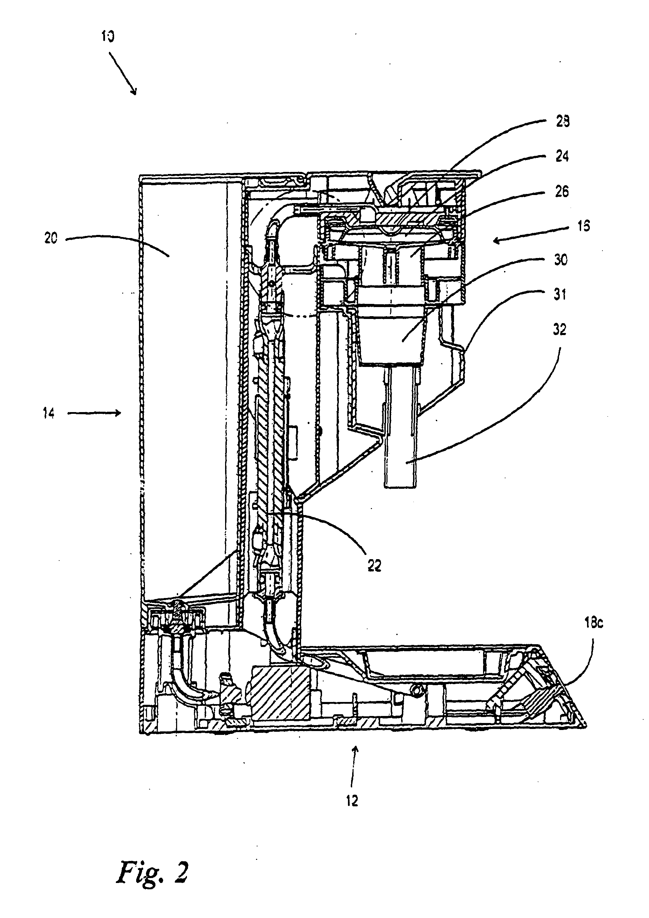

Figur 2 zeigt eine Schnittdarstellung derselben Kaffeemaschine 10. Der Vorrats- und Betriebsteil umfasst im Wesentlichen einen Wassertank 20, einen Durchlauferhitzer 22, eine nicht dargestellte Pumpe sowie verschiedene Verbindungsleitungen zwischen den genannten Elementen. Der Kaffeebereitungsteil 16 umfasst eine Brühkammer 24, umfassend ein Brühkammerunterteil 26 sowie ein Brühkammeroberteil 28. Unterhalb der Brühkammer 24 ist ein Auslauftopf 30 vorgesehen, in welchen bereiteter Kaffee von der Brühkammer 24 läuft. Der Auslauftopf 30 weist ein Auslaufrohr 32 auf, über welches bereiteter Kaffee in einen auf dem Ständerteil 12 bereitgestellten Auffangbehälter, z.B. eine Tasse, läuft. Der Auslauftopf ist von einem Auslaufgehäuse 31 umgeben.

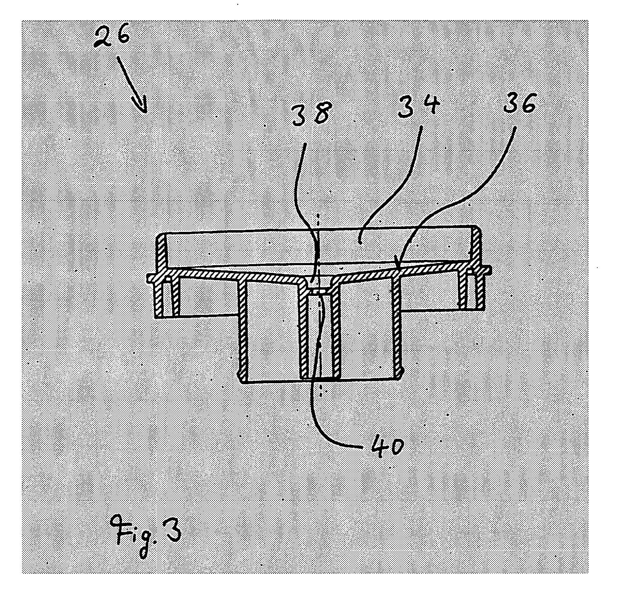

Figur 3 zeigt eine Schnittzeichnung durch das Brühkammerunterteil 26. Das Brühkammerunterteil 26 weist eine vorzugsweise runde Aufnahme 34 für (nicht dargestellte) Kaffeepads auf. Der Boden 36 der Aufnahme 34 ist vorzugsweise auf eine zentrale Vertiefung 38 hin abfallend ausgebildet. Zur Kaffeebereitung wird das Brühkammerunterteil 26 mit einem in Figur 3 nicht dargestellten Brühkammeroberteil dichtend verbunden, so dass erhitztes Brühwasser unter Druck den Kaffeepad in der Aufnahme 34 durchdringen kann. Der Kaffee wird dann durch eine Düse 40 in der zentralen Vertiefung 38 in den unter der Brühkammer 24 angeordneten Auslauftopf 30 gespritzt.

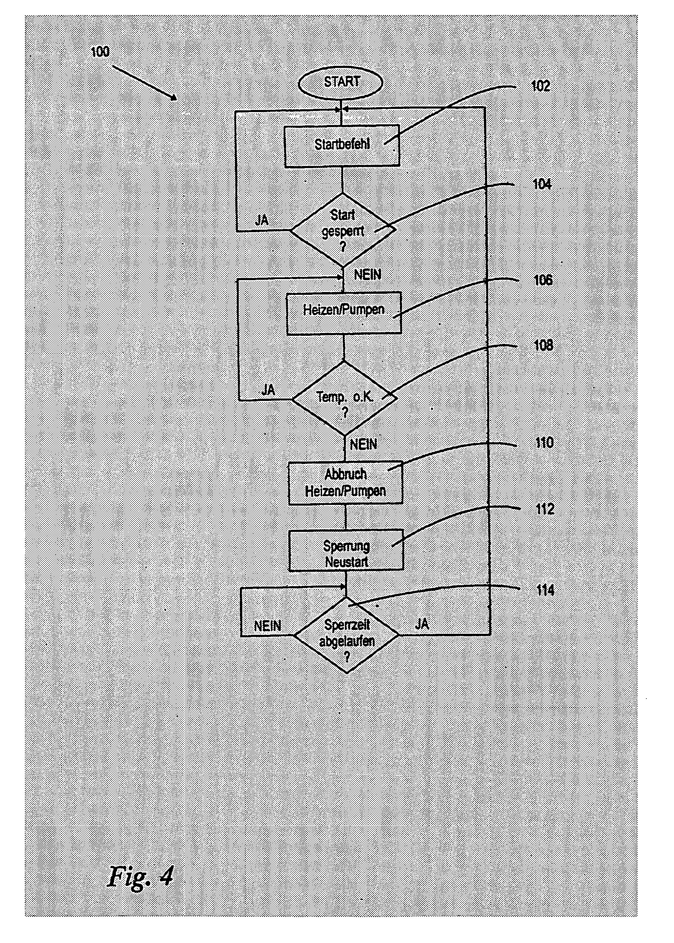

Figur 4 zeigt eine vereinfachte Darstellung eines Flussdiagramms zur Illustration des erfindungsgemäßen Steuerungsverfahrens 100. Das Verfahren 100 beginnt bei Schritt 102 mit dem Startbefehl des Benutzers. Ist der Start nicht gesperrt, was in Schritt 104 überprüft wird, beginnt die Maschine in Schritt 106 mit der Kaffeebereitung, was in Figur 4 vereinfacht als "Heizen/ Pumpen" bezeichnet wird. Tatsächlich kann dieser Schritt einen komplexen Ablauf mit eigenen Variations- und Abbruchmöglichkeiten umfassen. Parallel zu dem Schritt 106 findet ein Temperaturüberwachungsschritt 108 statt. Bei diesem wird das Signal eines an geeigneter Stelle, vorzugsweise unmittelbar vor der Brühkammer, angeordneten Temperaturfühlers kontinuierlich oder in vorgegebenen Zeitabständen mit einem Temperaturschwellenwert verglichen. Liegt die gemessene Brühwassertemperatur unterhalb des Schwellenwertes, wird der Heiz-/ Pumpschritt 106 fortgesetzt. Überschreitet die Brühwassertemperatur jedoch den Schwellenwert, bedeutet dies, dass voraussichtlich die Düse 40 verstopft ist, so dass das Brühwasser übermäßig erhitzt wird und die Gefahr einer Überdruckerzeugung besteht. In diesem Fall wird das Verfahren 100 mit Schritt 110, nämlich dem Abbruch des Heiz-/ Pumpschrittes 106, fortgesetzt. Zugleich wird bei einer besonders günstigen Ausführungsform ein Neustart gesperrt (Schritt 112). In Schritt 114 wird der Ablauf einer vorgesehenen Sperrzeit überwacht. Dies kann durch Überwachung eines Zeitintervalls oder Überwachung bestimmter Sensoren für vorgegebene Ereignisse, beispielsweise Öffnen der Brühkammer erfolgen. Solange in Schritt 114 kein Ablauf der Sperrzeit festgestellt wird, bleibt der Neustart gesperrt. Wird in Schritt 114 jedoch festgestellt, dass die Sperrzeit abgelaufen ist, kehrt der Prozess zu seinem Beginn zurück, so dass ein erneuter Startbefehl (Schritt 102) zum erneuten Durchlauf des beschriebenen Verfahrens 100 führt.

Die in der vorstehenden Beschreibung, in den Zeichnungen sowie den Ansprüchen offenbarten Merkmale der Erfindung könner sowohl einzeln als auch in beliebiger Kombination für die Verwirklichung der Erfindung wesentlich sein.

### Bezugszeichenliste:

- 10: Kaffeemaschine
- 12: Ständerteil
- 14: Vorrats- und Betriebsteil
- 16: Kaffeebereitungsteil
- 18a-c: Bedientasten
- 19: Kontrollleuchte
- 20: Wassertank
- 22: Durchlauferhitzer
- 24: Brühkammer
- 26: Brühkammerunterteil
- 28: Brühkammeroberteil
- 30: Auslauftopf
- 31: Auslaufgehäuse
- 32: Auslaufrohr
- 34: Aufnahme
- 36: Aufnahmeboden
- 38: Zentralöffnung
- 40: Düse
- 100: Steuerungsverfahren
- 102-114: Verfahrensschritte von 100

## Patentansprüche

1. Kaffeemaschine, insbesondere Espresso- oder Kaffeepad-Maschine, mit einem elektrischen Durchlauferhitzer (22) zum Erhitzen von mittels einer Pumpe aus einem Vorratstank (20) gefördertem Wasser, welches nach Erhitzung zur Kaffeebereitung unter Druck in eine Brühkammer (24) geleitet wird, die eine Austrittsdüse (40) zum Auslauf des bereiteten Kaffees aufweist, mit wenigstens einem Messfühler zur Erfassung eines mit der Temperatur des erhitzten Wassers korrelierten, elektrischen Messwertes, und mit einem Steuersystem zur Steuerung der Pumpleistung der Pumpe und/oder der Heizleistung des Durchlauferhitzers (22) in Abhängigkeit von dem Messwert, **dadurch gekennzeichnet, dass** das Steuersystem, wenn der Messwert eine Größe außerhalb vorbestimmter Grenzen annimmt, die Pumpleistung und/oder die Heizleistung abschaltet und ein Wiedereinschalten der Pumpleistung und/oder der Heizleistung für eine spezifizierte Sperr-Zeitspanne durch Aktivierung von Sperrmitteln sperrt.

2. Kaffee-Maschine nach Anspruch 1, **dadurch gekennzeichnet, dass** das Steuersystem zum Aktivieren/Deaktivieren des Sperrmittels einen Zeitschalter umfasst.

3. Kaffee-Maschine nach einem der Ansprüche 1 bis 2, **dadurch gekennzeichnet, dass** das Steuersystem wenigstens einen Messfühler zur Detektion eines für die Deaktivierung des Sperrmittels relevanten Ereignisses umfasst.

4. Kaffee-Maschine nach Anspruch 3, **dadurch gekennzeichnet, dass** der Messfühler ein Temperaturfühler zur Erfassung eines Wiedereintritts des Temperaturmesswertes in die vorbestimmten Grenzen ist.

5. Kaffee-Maschine nach Anspruch 3, **dadurch gekennzeichnet, dass** der Messfühler ein Öffnungssensor zur Erkennung eines Öffnens der Brühkammer (24) ist.

6. Kaffee-Maschine nach einem der Ansprüche 1 bis 5, **dadurch gekennzeichnet, dass** ein Signalgeber zur Erzeugung eines Alarmsignals bei durch Grenzüberschreitung des Messwertes bedingter Abschaltung vorgesehen ist.

7. Kaffee-Maschine nach Anspruch 6, **dadurch gekennzeichnet, dass** ein Signalgeber zur Erzeugung eines Alarmsignals während der Dauer der Sperr-Zeitspanne vorgesehen ist.

8. Steuerungsverfahren für eine Kaffeemaschine, insbesondere Espresso- oder Kaffeepad-Maschine, mit einem elektrischen Durchlauferhitzer (22) zum Erhitzen von mittels einer Pumpe aus einem Vorratstank (20) gefördertem Wasser, welches nach Erhitzung zur Kaffeebereitung unter Druck in eine Brühkammer (24) geleitet wird, die eine Austrittsdüse (40) zum Auslauf des bereiteten Kaffees aufweist, und mit wenigstens einem Messfühler zur Erfassung eines mit der Temperatur des erhitzten Wassers korrelierten, elektrischen Messwertes, wobei die Pumpleistung der Pumpe und/oder die Heizleistung des Durchlauferhitzers (22) in Abhängigkeit von dem Messwert variiert wird, **dadurch gekennzeichnet, dass** die Pumpleistung und/oder die Heizleistung abgeschaltet werden, wenn der Messwert eine Größe außerhalb vorbestimmter Grenzen annimmt, und dass ein Wiedereinschalten der Pumpleistung und/oder der Heizleistung für eine spezifizierte Sperr-Zeitspanne gesperrt wird.

9. Verfahren nach Anspruch 8, **dadurch gekennzeichnet, dass** die Spezifikation der Sperr-Zeitspanne eine Vorbestimmung einer minimalen Sperr-Zeitspanne umfasst.

10. Verfahren nach einem der Ansprüche 8 bis 9, **dadurch gekennzeichnet, dass** die Spezifikation der Sperr-Zeitspanne von einem durch wenigstens einen Messfühler detektierbaren Ereignis abhängt.

11. Verfahren nach Anspruch 10, **dadurch gekennzeichnet, dass** das Ereignis der Wiedereintritt eines Temperaturmesswertes in die vorbestimmten Grenzen ist.

12. Verfahren nach Anspruch 10, **dadurch gekennzeichnet, dass** das Ereignis ein Öffnen der Brühkammer (24) umfasst.

13. Verfahren nach einem der Ansprüche 10 bis 12, **dadurch gekennzeichnet, dass** das Ereignis ein Reinigen der Düse (40) umfasst.

14. Verfahren nach einem der Ansprüche 8 bis 13, **dadurch gekennzeichnet, dass** bei durch Grenzüberschreitung des Messwertes bedingter Abschaltung ein Benutzersignal erzeugt wird.

15. Verfahren nach einem Anspruch 14, **dadurch gekennzeichnet, dass** das Benutzersignal für die Dauer der Sperr-Zeitspanne erzeugt wird.

## Claims

1. Coffee machine, particularly espresso machine or coffee pad machine, with an electric throughflow heater (22) for heating water, which is conveyed by means of a pump from a storage tank (20) and which after heating is conducted under pressure into a brewing chamber (24) for coffee preparation, the chamber having an outlet nozzle (40) for issue of the prepared coffee, with at least one measurement sensor for detection of an electric measurement value correlated with the temperature of the heated water, and with a control system for control of the pumping performance of the pump and/or the heat output of the throughflow heater (22) in dependence on the measurement value, **characterised in that** the control system switches off the pumping performance and/or the heat output if the measurement value adopts a magnitude outside predetermined limits and by activation of blocking means blocks switching back on of the pumping performance and/or heat output for a specified blocking time period.

2. Coffee machine according to claim 1, **characterised in that** the control system comprises a time switch for activation/deactivation of the blocking means.

3. Coffee machine according to one of claims 1 and 2, **characterised in that** the control system comprises at least one measurement sensor for detection of an event relevant to deactivation of the blocking means.

4. Coffee machine according to claim 3, **characterised in that** the measurement sensor is a temperature sensor for detection of re-entry of the temperature measurement value into the predetermined limits.

5. Coffee machine according to claim 3, **characterised in that** the measurement sensor is an opening sensor for recognition of opening of the brewing chamber (24).

6. Coffee machine according to any one of claims 1 to 5, **characterised in that** a signal transmitter is provided for generating an alarm signal in the case of switching-off caused by the measurement value exceeding a limit.

7. Coffee machine according to claim 6, **characterised in that** a signal transmitter is provided for generating an alarm signal during the term of the blocking time period.

8. Control method for a coffee machine, particularly espresso or coffee pad machine, with an electric throughflow heater (22) for heating water, which is conveyed by means of a pump from a storage tank (20) and which after heating is conducted under pressure into a brewing chamber (24) for coffee preparation, the chamber having an outlet nozzle (40) for issue of the prepared coffee, and with at least one measurement sensor for detection of an electric measurement value correlated with the temperature of the heated water, wherein the pumping performance of the pump and/or the heat output of the throughflow heater (22) is or are varied in dependence on the measurement value, **characterised in that** the pumping performance and/or the heat output is or are switched off if the measurement value adopts a magnitude outside predetermined limits and that switching back of the pumping performance and/or heat output is blocked for a specified blocking time period.

9. Method according to claim 8, **characterised in that** the specification of the blocking time period comprises a predetermination of a minimum blocking time period.

10. Method according to one of claims 8 and 9, **characterised in that** the specification of the blocking time period depends on an event detectable by at least one measurement sensor.

11. Method according to claim 10, **characterised in that** the event is the re-entry of a temperature measurement value into the predetermined limits.

12. Method according to claim 10, **characterised in that** the event comprises an opening of the brewing chamber (24).

13. Method according to any one of claims 10 to 12, **characterised in that** the event comprises a cleaning of the nozzle (40).

14. Method according to any one of claims 8 to 13, **characterised in that** a user signal is generated when switching-off caused by the measurement value exceeding a limit occurs.

15. Method according to claim 14, **characterised in that** the user signal is produced for the duration of the blocking time period.

## Revendications

1. Machine à café, notamment machine pour espresso ou machine à café à dosettes, comprenant un chauffe-eau à écoulement électrique (22) destiné à échauffer de l'eau transportée à partir d'un réservoir (20) au moyen d'une pompe, laquelle eau, après échauffement pour la préparation de café, est amenée sous pression dans une chambre d'échaudage (24) qui présente une buse de sortie (40) pour l'évacuation du café préparé, comprenant au moins un capteur de mesure destiné à enregistrer une valeur de mesure électrique corrélée avec la température de l'eau échauffée, et comprenant un système de commande de la puissance de pompage de la pompe et/ou de la puissance de chauffage du chauffe-eau à écoulement (22) en fonction de la valeur mesurée, **caractérisée en ce que** le système de commande, lorsque la valeur mesurée prend une grandeur située en dehors de limites prédéterminées, arrête la puissance de pompage et/ou la puissance de chauffage et bloque, par activation de moyens de blocage, une remise en fonction de la puissance de pompage et/ou de la puissance de chauffage pour une période de temps de blocage spécifiée.

2. Machine à café selon la revendication 1, **caractérisée en ce que** le système de commande destiné à activer/désactiver le moyen de blocage comprend un interrupteur temporisé.

3. Machine à café selon l'une quelconque des revendications 1 à 2, **caractérisée en ce que** le système de commande comprend au moins un capteur de mesure pour détecter un événement pertinent à la désactivation du moyen de blocage.

4. Machine à café selon la revendication 3, **caractérisée en ce que** le capteur de mesure est un capteur de température destiné à enregistrer une nouvelle entrée de la valeur de mesure de la température dans les limites prédéterminées.

5. Machine à café selon la revendication 3, **caractérisée en ce que** le capteur de mesure est un capteur d'ouverture destiné à identifier une ouverture de la chambre d'échaudage (24).

6. Machine à café selon l'une quelconque des revendications 1 à 5, **caractérisée en ce qu'**un générateur de signal destiné à générer un signal d'alarme lors d'un arrêt dû au dépassement des limites de la valeur mesurée est prévu.

7. Machine à café selon la revendication 6, **caractérisée en ce qu'**un générateur de signal destiné à générer un signal d'alarme pendant la durée de la période de temps de blocage est prévu.

8. Procédé de commande d'une machine à café, notamment machine pour espresso ou machine à café à dosettes, comprenant un chauffe-eau à écoulement électrique (22) destiné à échauffer de l'eau transportée à partir d'un réservoir (20) au moyen d'une pompe, laquelle eau, après échauffement pour la préparation de café, est amenée sous pression dans une chambre d'échaudage (24) qui présente une buse de sortie (40) pour l'évacuation du café préparé, et comprenant au moins un capteur de mesure destiné à enregistrer une valeur de mesure électrique corrélée avec la température de l'eau échauffée, la puissance de pompage de la pompe et/ou la puissance de chauffage du chauffe-eau à écoulement (22) étant variés en fonction de la valeur mesurée, **caractérisé en ce que** la puissance de pompage et/ou la puissance de chauffage sont arrêtés lorsque la valeur mesurée prend une grandeur située en dehors de limites prédéterminées, et **en ce qu'**une remise en fonction de la puissance de pompage et/ou de la puissance de chauffage est bloquée pour une période de temps de blocage spécifiée.

9. Procédé selon la revendication 8, **caractérisé en ce que** la spécification de la période de temps de blocage comprend une prédétermination d'une période de temps de blocage minimale.

10. Procédé selon l'une quelconque des revendications 8 à 9, **caractérisé en ce que** la spécification de la période de temps de blocage dépend d'un événement détectable au moyen d'au moins un capteur de mesure.

11. Procédé selon la revendication 10, **caractérisé en ce que** l'événement est la nouvelle entrée d'une valeur de mesure de température dans les limites prédéterminées.

12. Procédé selon la revendication 10, **caractérisé en ce que** l'événement comprend une ouverture de la chambre d'échaudage (24).

13. Procédé selon l'une quelconque des revendications 10 à 12, **caractérisé en ce que** l'événement comprend un nettoyage de la buse (40).

14. Procédé selon l'une quelconque des revendications 8 à 13, **caractérisé en ce qu'**un signal utilisateur est généré lors de l'arrêt dû à un dépassement des limites de la valeur de mesure.

15. Procédé selon la revendication 14, **caractérisé en ce que** le signal utilisateur est généré pour la durée de la période de temps de blocage.
